(19) Europäisches Patentamt
European Patent Office
Office européen des brevets

(11) **EP 4 290 493 A1**

(12) **DEMANDE DE BREVET EUROPEEN**

(43) Date de publication:
**13.12.2023 Bulletin 2023/50**

(21) Numéro de dépôt: **23177181.7**

(22) Date de dépôt: **05.06.2023**

(51) Classification Internationale des Brevets (IPC):
**G08G 1/01** *(2006.01)*     **G08G 1/09** *(2006.01)*
**G08G 1/0967** *(2006.01)*     **G08G 1/16** *(2006.01)*
**G01C 21/36** *(2006.01)*     **G01C 21/34** *(2006.01)*
**B60W 30/095** *(2012.01)*

(52) Classification Coopérative des Brevets (CPC):
**G08G 1/012; G01C 21/3461; G01C 21/3691;
G08G 1/0133; G08G 1/0141; G08G 1/096716;
G08G 1/096775; G08G 1/164**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **09.06.2022 FR 2205524**

(71) Demandeur: **Insurlytech**
**35510 Cesson-Sévigné (FR)**

(72) Inventeurs:
• **ARRAIS, Marouan**
**35510 Cesson-Sévigné (FR)**
• **LE BRAS, Thomas**
**35140 Saint-Aubin-du-Cormier (FR)**

(74) Mandataire: **Vidon Brevets & Stratégie**
**16B, rue de Jouanet**
**BP 90333**
**35703 Rennes Cedex 7 (FR)**

(54) **PROCÉDÉ D'OBTENTION D'UNE DONNÉE REPRÉSENTATIVE D'UN RISQUE DE SURVENANCE D'UN ACCIDENT DE LA ROUTE, DISPOSITIF, SYSTÈME ET PROGRAMMES D'ORDINATEURS CORRESPONDANTS**

(57) L'invention se rapporte à un procédé d'obtention d'une donnée représentative d'un risque de survenance d'un accident de la route, procédé mis en oeuvre par un dispositif électronique serveur. Un tel procédé comprend :
- Une étape de réception (10), en provenance d'un dispositif d'utilisateur, d'une donnée représentative d'une position géographique courante dudit dispositif d'utilisateur ;
- Une étape d'obtention (20) de caractéristiques statiques de localisation, en fonction de la donnée représentative de la position géographique ;
- Une étape d'obtention (30) de caractéristiques dynamiques de localisation, en fonction de donnée représentative de la position géographique courante et de la date et de l'heure courante ;
- Une étape de fourniture (40), à un module de classification, des caractéristiques dynamiques et des caractéristiques statiques préalablement obtenues, lequel module de décision délivre (50) un score représentatif du risque de survenance d'un accident de la route.

[Fig. 1]

**Description**

1. Domaine

La divulgation se rapporte à la prévention des accidents de la route. La divulgation se rapporte plus particulièrement à la prévention des accidents de la routes dans le cadre d'un déplacement. Plus particulièrement encore, la divulgation se rapporte à l'évaluation d'un risque de survenance d'un accident de la route à un instant donné.

2. Art Antérieur

L'une des problématiques majeures auxquelles les conducteurs sont confrontés lorsqu'ils utilisent leurs véhicules, est d'évaluer les conditions de circulation et de conduite et d'adapter leurs comportements de conduite en conséquence. L'objectif d'un conducteur, par nature, n'est pas de provoquer ou de subir un accident de la route. Bien que certains conducteurs puissent se montrer imprudents voire dangereux dans la manière dont ils abordent la conduite de leurs véhicules, la grande majorité d'entre eux a pour objectif d'arriver sains et saufs, sans encombre à destination.
Pour ce faire, un conducteur évalue en permanence les conditions de circulation et de déplacement tout au long de son trajet. Avec les technologies récentes, les véhicules eux-mêmes tendent à réaliser ce type d'évaluation. Pour les véhicules, l'objectif est d'obtenir une information instantanée sur la dangerosité des conditions de circulation. A l'aide de capteurs, la véhicule est en mesure d'évaluer certaines conditions de conduite indépendante du conducteur. Par exemple les capteurs de pluie permettent au véhicule de déterminer si la vitesse doit être adaptée, notamment au regard des contraintes réglementaires en vigueur sur la voie sur laquelle le véhicule circule. Cette détermination permet également d'avertir, au sein de l'habitacle, l'utilisateur d'une dégradation des conditions de conduite et donc de la prévenir d'un potentiel danger relatif à la conduite. Un autre exemple consiste à utiliser les capteurs de luminosité du véhicule pour activer ou désactiver automatiquement les feux de routes ou les feux de croisement, dans l'objectif d'assurer une bonne visibilité du conducteur. Encore un autre exemple consiste à mesurer, au sein du véhicule, la vigilance du conducteur (tendance à l'endormissement par exemple), pour avertir le conducteur d'un risque pour sa sécurité et l'inviter à stopper le véhicule. De nombreux autres exemples pourraient être développés. Toutes ces techniques ont un point commun : elles se rapportent à la mesure d'une situation en temps réel par le véhicule lui-même. Certaines de ces techniques peuvent être qualifiées d'aides à la conduite, mais toutes servent un objectif d'augmentation de la sécurité. En revanche, aucune de ces techniques ne permet de déterminer un risque de survenance d'un accident de la route. En effet, ces techniques permettent bien de repérer des dangers, à un moment ou à un autre, danger qui sont liés soit à l'environnement du véhicule, soit au conducteur du véhicule lui-même.
Il existe donc un besoin de fournir une évaluation du risque, pour un conducteur, de la survenance d'un accident, en fonction du trajet qu'il effectue.

3. Résumé

La technique conçue par les inventeurs a été testée pour répondre au moins en partie aux problématiques posées par l'art antérieur. Plus particulièrement, la technique décrite a été conçue pour permettre l'obtention d'un score représentatif d'un risque de survenance d'un accident de la route. Ainsi, la divulgation se rapporte à un procédé d'obtention d'une donnée représentative d'un risque de survenance d'un accident de la route, procédé mis en oeuvre par un dispositif électronique serveur. Un tel procédé comprend :

- Une étape de réception, en provenance d'un dispositif d'utilisateur, d'une donnée représentative d'une position géographique courante dudit dispositif d'utilisateur ;
- Une étape d'obtention de caractéristiques statiques de localisation, en fonction de la donnée représentative de la position géographique ;
- Une étape d'obtention de caractéristiques dynamiques de localisation, en fonction de donnée représentative de la position géographique courante et de la date et de l'heure courante ;
- Une étape de fourniture, à un module de classification, des caractéristiques dynamiques et des caractéristiques statiques préalablement obtenues, lequel module de décision délivre un score représentatif du risque de survenance d'un accident de la route.

Ainsi, sur la base d'un apprentissage préalablement réalisé, il est possible de déterminer, de manière absolue, c'est-à-dire sans faire référence à l'utilisateur lui-même, une probabilité externe de survenance d'un accident de la route. L'apprentissage est réalisé sur la base d'un ensemble de données, correspondant aux caractéristiques statiques et aux caractéristiques dynamiques, qui sont combinées pour permettre de délivrer une situation propice ou non à la survenance d'un accident.

Selon une caractéristique particulière, l'étape de réception comprend :

- une étape de réception, par le dispositif électronique serveur, d'une requête d'obtention d'un message d'information en provenance du dispositif d'utilisateur, ladite requête comprenant la donnée représentative de la position géographique dudit dispositif d'utilisateur et un identifiant du dispositif d'utilisateur ;
- une étape d'horodatage de ladite requête ;
- une étape d'insertion de ladite requête horodatée au sein d'une base de données ;
- une étape optionnelle d'obtention au sein de la base de données, d'un score précédemment calculé pour une position proche de la position géographique courante et à un temps proche de l'horodatage effectué pour ladite requête.

Ainsi, il est possible de ne pas répéter inutilement les calculs effectués en permettant une certaine mutualisation de ceux-ci, sans nuire à la véracité du résultat obtenu, tout en économisant des ressources et en accélérant le temps de traitement de la requête. Dans un tel cas de figure, par extension, les étapes d'obtention des caractéristiques et de fourniture du vecteur de caractéristique au module de classification ne sont donc pas mises en oeuvre.

Selon une caractéristique particulière, l'étape d'obtention de caractéristiques statiques de localisation comprend :

- La détermination, à partir d'une base de données de segments de routes, d'un segment de route courant qui est associé à la donnée représentative d'une position géographique courante ;
- L'obtention, d'une courbure du segment de route courant, ladite courbure étant fournie sous la forme d'un rayon de courbure moyen dudit segment de route ;
- La détermination d'une limitation de la vitesse associée au segment de route courant ;
- La densité de population de la zone géographique associée à la donnée représentative de la position géographique courante.

Ainsi, il est possible de déterminer un vecteur statique, représentatif de la position de courante.

Selon une caractéristique particulière, l'étape d'obtention de caractéristiques dynamiques de localisation comprend :

- une étape d'obtention, sous la forme d'une donnée numérique, d'une estimation du trafic routier courant de la zone géographique associée à la donnée représentative de la position géographique courante et de la date et de l'heure courante ;
- une étape d'obtention, sous la forme d'un tableau de données numériques, des conditions météorologiques associées à la donnée représentative de la position géographique courante et de la date et de l'heure courante ;
- une étape de détermination de l'orientation d'un segment de route courant par rapport au sens de circulation du dispositif d'utilisateur ;
- une étape de détermination de la position du soleil associées à la donnée représentative de la position géographique courante et de la date et de l'heure courante.

Ainsi, il est possible de déterminer un vecteur dynamique, représentatif d'une situation courante.

Selon une caractéristique particulière, l'étape de fourniture (40), au module de classification, des caractéristiques dynamiques et des caractéristiques statiques comprend :

$$y = f(\,(\text{traffic} \times w_0 + \text{weather} \times w_1 + \ldots + \text{road geometry} \times w_{n-1} + \text{sun position} \times w_n) + b)$$

où $w\_i, i \in \{0,\ldots,n\}$ sont les poids transformant les données et b est le biais permettant le décalage de la fonction d'activation f. Pour les couches cachées, la fonction $\text{ReLU}(x) = \max(x,0)$ a été utilisée comme fonction d'activation, tandis que $\text{sigmoïde}(x) = 1/(1 + \exp(-x))$ a été utilisée pour la couche de sortie. Cette dernière nous permet de représenter la sortie sous forme de probabilité.

Selon une caractéristique particulière, postérieurement à la délivrance, par le module de décision, du score, le procédé comprend une étape de formatage, à destination du dispositif d'utilisateur, d'un message de réponse, ledit message tenant compte de la valeur du score que le message comprenne une alerte à destination de l'utilisateur lorsque la valeur du score excède un plafond prédéterminé.

Selon une caractéristique particulière, le message de réponse comprend un message préformatté à destination de l'utilisateur et une donnée représentative du score, de sorte que le dispositif d'utilisateur est en mesure d'effectuer une modification du score en fonction de paramètres qui lui sont propres.

Selon un autre aspect, l'invention se rapporte également à un dispositif électronique d'obtention d'une donnée représentative d'un risque de survenance d'un accident de la route. Un tel dispositif comprend :

- Un module de réception, en provenance d'un dispositif d'utilisateur, d'une donnée représentative d'une position géographique dudit dispositif d'utilisateur ;
- Un module pour l'obtention de caractéristiques statiques de localisation, en fonction de la donnée représentative de la position géographique ;
- Un module pour l'obtention de caractéristiques dynamiques de localisation, en fonction de donnée représentative de la position géographique et de la date et de l'heure courante ;
- Un module pour la fourniture, à un module de classification, des caractéristiques dynamiques et des caractéristiques statiques préalablement obtenues, lequel module de classification délivre un score représentatif du risque de survenance d'un accident de la route.

Selon une implémentation préférée, les différentes étapes des procédés selon la présente divulgation sont mises en oeuvre par un ou plusieurs logiciels ou programmes d'ordinateur, comprenant des instructions logicielles destinées à être exécutées par un processeur de données d'un terminal d'exécution selon la présente technique et étant conçu pour commander l'exécution des différentes étapes des procédés, mis en oeuvre au niveau d'un terminal de communication, d'un serveur distant et/ou d'une chaîne de blocs, dans le cadre d'une répartition des traitements à effectuer et déterminés par un code source scripté ou un code compilé.

En conséquence, la présente technique vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La présente technique vise aussi un support d'informations lisible par un processeur de données, et comportant des instructions d'un programme tel que mentionné ci-dessus.

Le support d'informations peut être n'importe quelle entité ou terminal capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique ou optique, qui peut être acheminé via un câble électrique ou optique, par radio ou par d'autres moyens. Le programme selon la présente technique peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la présente technique est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de la présente technique.

4. Dessins

D'autres buts, caractéristiques et avantages de l'invention apparaîtront plus clairement à la lecture de la description suivante, donnée à titre de simple exemple illustratif, et non limitatif, en relation avec les figures, parmi lesquelles :

- [fig. 1] représente le procédé de traitement de l'invention ;
- [fig. 2] représente les différents modules mis en oeuvre dans un dispositif serveur selon l'invention ;
- [fig. 3] représente une architecture physique simplifiée d'un dispositif serveur ;
- [fig. 4] représente une architecture physique simplifiée dispositif utilisateur ;

5. Description d'un mode de réalisation

5.1. Rappels des principes

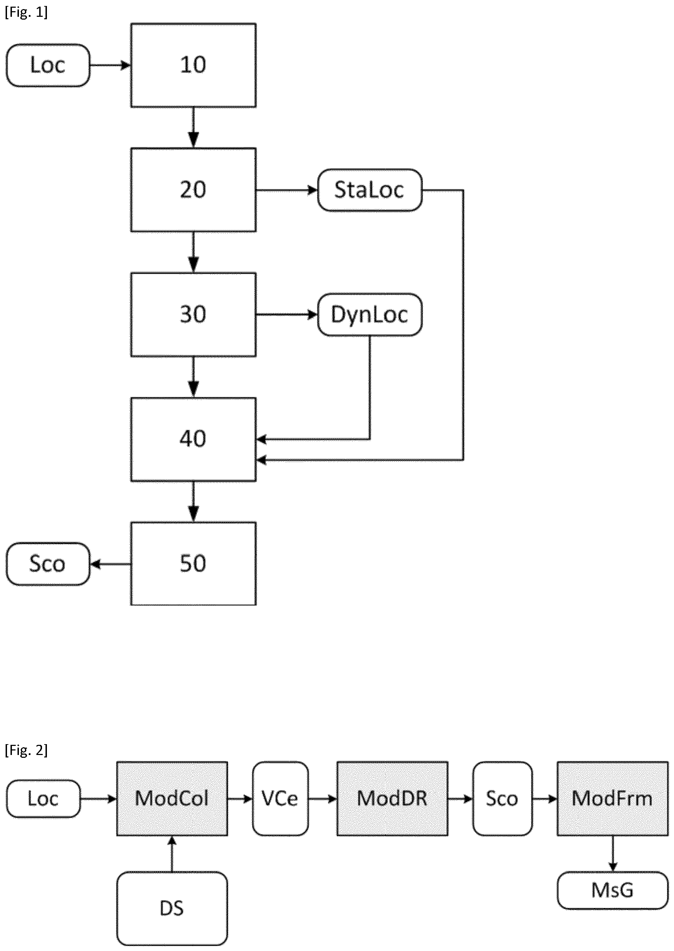

Comme exposé précédemment, un objet de la présente technique est de permettre, à un instant donné, de disposer d'une information relative à la probabilité de survenance d'un accident de la route à une position géographique. À l'aide de cette information, il est possible d'avertir un utilisateur, se situant aux alentours de cette position géographique, de la possibilité de survenance d'un accident. Au final, l'objectif est d'inciter les conducteurs à être plus prudents, particulièrement lorsque des conditions accidentogènes sont réunies. Cette information est intrinsèque à des conditions de survenance et ne dépend pas de l'utilisateur à qui cette information est fournie. Comme indiqué précédemment, également, à la différence des techniques actuelles connues, consistant à laisser le véhicule « intelligent » déterminer les conditions et les risques que présentent la route empruntée par le véhicule, l'objet de la présente technique et de fournir, en temps réel, une information nouvelle relative au risque de survenance d'un accident de la route, indépendamment de l'utilisateur. Cette information peut être fournie à un terminal de communication en possession d'un utilisateur à bord du véhicule ou bien encore à un dispositif directement embarqué au sein du véhicule lui-même, permettant le traitement de cette information par le véhicule (en fonction de l'utilisateur dans ces conditions). Dans la suite, on considère, pour plus de simplicité que l'information est transmise à un terminal de communication en possession du conducteur du véhicule, que ce terminal soit ou non connecté au véhicule (par exemple par un procédé de partage d'écran ou autre).
D'une manière générale, en relation avec la figure 1, le procédé mis en oeuvre pour l'obtention de l'information transmise est le suivant :

- Une étape de réception (10), au dispositif serveur, d'une donnée représentative d'une position géographique (Loc) ; optionnellement, une donnée représentative d'un identifiant d'utilisateur peut également être transmise subséquemment, concomitamment ou à la place de la donnée de position au dispositif serveur ;
- Une étape d'obtention (20) de caractéristiques statiques de localisation (StaLoc), en fonction de la donnée représentative de la position géographique (Loc), les caractéristiques statiques comprenant notamment par exemple la géométrie de l'axe de circulation courant qui est associé à la position géographique, la ou les limitations de vitesses, la densité de population ;
- Une étape d'obtention (30) de caractéristiques dynamiques de localisation (DynLoc), comprenant par exemple, pour une date et une heure donnée, en fonction de la donnée représentative de la position géographique, la météo, la position du soleil et des variables temporelles, dont certaines matérialisations sont explicitées par la suite ;
- Une étape de fourniture (40), à un module de classification, des caractéristiques dynamiques (DynLoc) et des caractéristiques statiques (StaLoc) préalablement obtenues, le module délivrant (50), en retour, un score (Sco) représentatif du risque de survenance d'un accident de la route pour la position géographique.

À l'issue de cette mise en oeuvre, on dispose donc d'une information (score) qui représente le risque, à un instant donné et pour une position géographique donnée, d'une survenance d'un accident de la route. La technique qui a été mise au point par les inventeurs offre la particularité de se baser à la fois sur des caractéristiques statiques et sur des caractéristiques dynamiques. Les caractéristiques statiques sont, comme leur nom l'indique, relativement invariables dans le temps. Les caractéristiques dynamiques sont quant à elles variables dans le temps et/ou l'espace et/ou par rapport à une autre variable (non nécessairement temporelle). Les caractéristiques statiques comprennent par exemple, selon la présente technique, tout ou partie de : la position géographique, les caractéristiques dérivées de la géométrie de la route associées à la position géographique, telles que la courbure de la route, la limite de vitesse à cette position, le dénivelé, la densité de population de la position géographique, etc. L'étape de réception (10) précédemment mentionnée comprend :

- une étape de réception, par le dispositif électronique serveur, d'une requête d'obtention d'un message d'information en provenance du dispositif d'utilisateur, ladite requête comprenant la donnée représentative de la position géographique dudit dispositif d'utilisateur et un identifiant du dispositif d'utilisateur ;
- une étape d'horodatage de ladite requête ;
- une étape d'insertion de ladite requête horodatée au sein d'une base de données ;

- une étape optionnelle d'obtention au sein de la base de données, d'un score précédemment calculé pour une position proche de la position géographique courante et à un temps proche de l'horodatage effectué pour ladite requête, comme exposé ci-après.

L'insertion de la requête et de l'horodatage de la donnée représentative de la localisation du dispositif d'utilisateur requérant permet, dans au moins un mode de réalisation, de déterminer la vitesse de déplacement du dispositif d'utilisateur, et dans certains modes de réalisation temporisés, de dériver à partir de cette vitesse de déplacement, une position géographique effective du dispositif d'utilisateur au temps (heure/minutes) à laquelle la prédiction peut être effectuée par le module de classification. Cette caractéristique peut avoir de l'importance, dans ces modes de réalisation dits temporisés, particulièrement en situation de congestion des réseaux de communication ou en cas de déplacement en zone urbaine : les inventeurs ont constaté, en effet, que dans de telles situations il peut être nécessaire, avant de prédire la survenance de l'accident, de calculer en quelques sorte la position à laquelle dispositif d'utilisateur sera présent au moment de la réception du message. Bien que dans la plupart des situations, une telle « prédiction » préalable de la positon de l'utilisateur ne soit pas indispensable, celle-ci peut se révéler importante dans d'autres.

Les caractéristiques dynamiques comprennent par exemple, selon la présente technique, tout ou partie de : les conditions météorologiques (météo), les conditions de circulation (trafic), la date et l'heure et d'autres conditions, comme la position du soleil dans le ciel (azimut), etc.

Par exemple la caractéristique dynamique « météo » évolue au cours du temps. Les types de données associés à cette caractéristique dynamique « météo » peuvent comprendre par exemple la température, la pluviométrie courante, la couverture nuageuse. Ainsi, par exemple, la caractéristique dynamique « météo » comprend trois composantes, stockées dans trois champs : température, pluviométrie (nivométrie, i.e. pour l'enneigement), couverture nuageuse. Chacun de ces trois champs comprend une valeur : par exemple une valeur de température, un index pour la pluviométrie (0 : aucune pluie/aucune chute de neige, ..., 9 : pluie battante) et un index pour la couverture nuageuse (octa : 0 : aucune couverture nuageuse, ..., 8 : ciel complètement couvert, 9 : obstruction de la visibilité). De même, la caractéristique « trafic routier » évolue dans le temps. Cette caractéristique représente l'état du trafic routier à un moment donné, sur une portion de voie de circulation donnée. Les inventeurs ont également effectué des recherches pour inclure des caractéristiques stables dans le temps.

L'ensemble des caractéristiques retenues (DynLoc, StaLoc) forme un vecteur d'entrée, qui peut être comparé à une signature des caractéristiques globales de circulation à un moment donné. Ce vecteur d'entrée est obtenu par un module dit de « collecte » dont l'objectif est d'obtenir et de formater les données du vecteur d'entrée pour qu'elles correspondent à des données acceptées par le module de classification. Le vecteur d'entrée est ensuite fourni au module de classification afin de déterminer le score représentatif du risque de survenance d'un accident de la route à la position géographique donnée au moment de l'interrogation.

La figure 2 représente l'architecture interne du système mis en oeuvre dans le cadre de la présente technique. Plus particulièrement, dans un tel système, un module de collecte (ModCol) reçoit la position géographique (Loc) associée à l'utilisateur. A partir de la position géographique et de sources de données (DS), il calcule un vecteur de caractéristiques d'entrée (VCe), également appelé vecteur d'entrée. Le vecteur d'entrée est ensuite fourni au module de prise de décision (ModDR) qui calcule le score (SCo) associé au vecteur d'entrée (VCe). Ce score est ensuite fourni à un module de formatage (ModFrm) qui se charge pour l'utilisateur dont on a reçu la position géographique, de formater un message (Msg) à adresser à celui-ci. Astucieusement, le message à adresser à l'utilisateur peut tenir compte d'autres paramètres que le score calculé par le module de classification, comme cela est explicité par la suite.

Selon la présente technique, le module de classification comprend un réseau de neurones (ou un arbre de décision), préalablement entrainé et configuré, qui présente la particularité d'avoir été entrainé sur une base de données d'accidents de la route déjà survenus. En d'autres termes, le module de classification est conçu et entrainé à l'aide d'une base de données comprenant, pour un territoire donné (un pays, une région ou un département), tout ou partie des accidents de la route déjà survenus dans une période temporelle passée, dite période de référence. Pour pallier les risques de surapprentissage lié à l'utilisation de ces techniques, la base de données de la période de référence est astucieusement complétée par une base de données représentative de l'absence d'accidents. Plus particulièrement, une base de données de référence « d'absence d'accident » (pour la même période) est également fournie lors de l'apprentissage afin d'éviter que le module de classification ne soit trop influencé par les accidents effectivement survenus.

Le vecteur d'entrée qui est fourni au module de classification comprend donc au moins autant de valeurs que le nombre de variables utilisés pour effectuer l'entrainement du module de classification. En d'autres termes, l'entrainement du module de classification a été réalisé en tenant compte, pour chaque accident survenu et répertorié, de l'ensembles des caractéristiques statiques et dynamiques qui ont pu être obtenues sur les conditions de survenance de cet accident. Pour équilibrer l'apprentissage, et dans la mesure où la très grande majorité des trajets effectués n'entraine pas la survenance d'un accident, des situations de non survenance d'accident ont également été introduites.

Dans au moins un mode de réalisation, le module de classification comprend un réseau de neurones. Plus particulièrement, le réseau est constitué de couches d'unités. Une couche d'unités d'entrée prenant l'information brute (le vecteur des caractéristiques statiques et dynamiques) est utilisée. Cette dernière est connectée à une couche d'unités cachées permettant l'extraction du motif, qui elle-même est connectée à une unité de sortie.

Au niveau d'une seule unité appartenant à la première couche cachée, le calcul effectué peut être vu comme la sortie d'une fonction d'activation f de la multiplication d'un vecteur contenant toutes les variables utilisées {trafic, météo, ..., géométrie de la route, position du soleil} par le vecteur des poids :

$$y = f(\ (\text{traffic} \times w_0 + \text{weather} \times w_1 + \ldots + \text{road geometry} \times w_{n-1} + \text{sun position} \times w_n) + b)$$

où $w\_i, i \in \{0,\ldots,n\}$ sont les poids transformant les données et b est le biais permettant le décalage de la fonction d'activation f. Pour les couches cachées, la fonction ReLU(x) =max(x,0) a été utilisée comme fonction d'activation, tandis que sigmoïde(x)=1/(1+exp(-x)) a été utilisée pour la couche de sortie. Cette dernière nous permet de représenter la sortie sous forme de probabilité.

Le module de classification fournit le score sous la forme d'une valeur comprise entre 0 et 1 (0 représentant un niveau de risque inexistant et 1 le niveau de risque le plus élevé). Ce score est ensuite utilisé, par le module de formatage, pour construire une réponse à la requête reçue en provenance du terminal de communication de l'utilisateur. Dans l'exemple de réalisation décrit, la réponse transmise au terminal de communication se présente sous la forme d'un message JSON qui comprend basiquement deux champs de valeurs : un champ relatif au statut (none | alert) et un champ descriptif d'un message à afficher, sous la forme d'une chaine de caractères.

Le champ relatif au statut est déterminé par le module de formatage en fonction de la valeur du score. Lorsque le score fourni par le module de classification excède un seuil prédéterminé, le champ relatif au statut est positionné à « alert ». Le seuil prédéterminé est positionné, après étude et recherche par les inventeurs, à une valeur aux alentours 65 à 80%, par exemple 70% (0,7). Cette valeur est celle qui permet de représenter d'une part une certaine élévation du risque et d'autre part évite de surcharger les utilisateurs avec des alertes non pertinentes. Le champ message comprend une information lorsque le champ statut est positionné à « alert ». Le message est construit par le module de formatage en fonction d'une part de la valeur du score et d'autre part des données du vecteur d'entrée. Plus particulièrement, lorsque certaines données du vecteur d'entrée sont caractérisées comme participant à l'élévation du risque, ces données peuvent être utilisées pour formater un message particulier, insistant sur ce facteur de risque (par exemple la position du soleil ou la densité de population d'une zone donnée).

Une fois reçu par le terminal de communication, le message JSON est traité et affiché.

De manière complémentaire, le champ message est construit par le module de formatage en fonction de données contextuelles liées à l'utilisateur. Plus particulièrement, dans cet exemple de réalisation, le module de formatage interroge un module contextuel, lequel compare un certain nombre de données issues de la position géographique avec des données de position successives enregistrées pour l'utilisateur. Dans cette situation, le module de collecte fournit, au module contextuel, tout ou partie des données du vecteur d'entrée. Le module contextuel compare ou interprète ces données du vecteur d'entrée à un historique (par exemple l'historique des positions successives) de l'utilisateur. Par exemple, le module contextuel peut déterminer la vitesse de déplacement de l'utilisateur. Cette vitesse de déplacement de l'utilisateur peut être comparée aux données de limitation de vitesse transmises par le vecteur d'entrée afin de déterminer si la vitesse de déplacement de l'utilisateur est excessive ou au contraire en dessous des limitations autorisées. Par exemple encore, le module contextuel peut utiliser le rayon courbure du segment sur lequel l'utilisateur circule et comparer ce rayon à un plafond prédéterminé, lequel permet de déterminer un niveau de dangerosité ou au contraire d'absence de dangerosité à un instant donné. Par exemple encore, le module contextuel peut utiliser le segment sur lequel l'utilisateur circule, la densité de population locale, la date et l'heure pour de déterminer un niveau de dangerosité ou au contraire d'absence de dangerosité à ces conditions particulières (cas des entrées sortie des écoles et établissements scolaires par exemple).

Dans ces cas précédemment décrits, le module contextuel fournit cette information au module de formatage, qui en tient compte pour augmenter ou diminuer le score fourni par le module de classification.

Dans au moins un mode de réalisation, le message qui est transmis au dispositif d'utilisateur ne comprend que la valeur du score, et le dispositif d'utilisateur utilise cette valeur du score en fonction de paramètres qui lui sont propres. Plus particulièrement, le dispositif d'utilisateur est muni d'un module de prise de décision, lui permettant de déterminer le message à présenter à l'utilisateur en fonction de paramètres additionnels, comme la vitesse du véhicule, par exemple. A réception du message en provenance du dispositif serveur, le module de prise de décision du dispositif d'utilisateur mesure ou obtient au moins un paramètre complémentaire relatif au véhicule, et en fonction des valeurs de ces paramètres complémentaires, modifie la valeur du score fourni par le dispositif serveur, puis, présente, à l'utilisateur, un message adapté à la nouvelle valeur du score calculé en fonction des paramètres complémentaires. Parmi les paramètres complémentaires influant sur la valeur de score mis à jour par le dispositif d'utilisateur, on trouve notamment : la vitesse du véhicule, la distance séparant le véhicule du véhicule qui le précède (s'il est effectivement précédé d'un véhicule), la pression des pneumatiques, le temps depuis lequel le véhicule roule. Pour des raisons de rapidité du traitement à effectuer par le dispositif serveur et pour des besoins d'optimisation, ces paramètres ne peuvent pas nécessairement être transmis au dispositif serveur. Il est donc intéressant, lorsque c'est possible, d'utiliser ces paramètres complémentaires, qui influe également sur le risque de provoquer un accident pour informer l'utilisateur.

Dans au moins un mode de réalisation, l'étape d'obtention des caractéristiques statiques de localisation, en fonction de la donnée représentative de la position géographique, comprend :

- Une étape d'obtention, par le dispositif serveur, au sein d'une base de données géographique, d'un segment de circulation le plus proche de la donnée représentative de la position géographique reçue ; le segment de circulation consiste en une suite plus ou moins importante de positions géographiques ; Le segment de circulation retenu correspond à un segment de circulation qui a fait l'objet d'un apprentissage dans le modèle : il ne s'agit donc pas d'un segment de circulation « inconnu ».
- Une étape optionnelle d'obtention, pour ce segment de circulation, d'une donnée représentative d'une limitation de vitesse ;
- Une étape optionnelle d'obtention, pour ce segment de circulation, d'un degré de courbure du segment de circulation ;
- Une étape optionnelle d'obtention d'une donnée représentative de la densité de population et/ou d'un identifiant d'une ville la plus proche de la donnée représentative de la position géographique.

5.2. Principe de fonctionnement du système

Comme indiqué précédemment, on construit un vecteur de données pour ensuite fournir ce vecteur au module de classification, lequel, en fonction de sa configuration (i.e. les poids issus de l'apprentissage), va dériver une probabilité de survenance d'un accident à une position géographique donnée et à un instant donné, cette probabilité ne dépendant pas nécessairement et/ou pas toujours de l'utilisateur, mais de manière générale de conditions extrinsèques.

5.3. Caractéristiques statiques

Comme exposé précédemment, deux types d'entrées ont été utilisés : les caractéristiques statiques et les caractéristiques dynamiques.

Les caractéristiques statiques représentent les caractéristiques qui ne changent pas dans le temps ou qui changent lentement et peuvent être considérées comme constantes. Il s'agit notamment des caractéristiques dérivées de la géométrie de la route, comme la courbure de la route ou d'autres propriétés comme la limite de vitesse et la densité de population. Dans au moins un mode de réalisation, les caractéristiques statiques sont les suivantes :

- Sinuosité : cette métrique reflète la courbure de la route et est définie comme le rapport entre la distance la plus courte parcourue par le conducteur et la distance linéaire la plus courte entre les points de départ et d'arrivée (par exemple sur un tronçon d'une route et/ou entre deux intersections). Une partie des longueurs des segments de route a été fournie par la base de données gouvernementale tandis qu'une autre a été obtenue en utilisant l'API Distance Matrix de Google.
- Courbure des routes : La forme de chaque segment de route est analysée pour filtrer les routes les plus sinueuses et surtout pour mesurer la longueur des courbes (virages) exprimée en mètres. Chaque route de la base de données est constituée d'une séquence de localisations GPS. Pour toute séquence de trois points, un cercle passe par ces points. Le rayon de ce cercle est le rayon de la courbe à ce point.

Le processus de détermination de la courbure des routes est le suivant :

1. Le rayon du cercle est le rayon de la courbe en ce point. Ce rayon peut être calculé à l'aide de la formule suivante :

$$r = abc \, / \, sqrt((a+b+c)(b+c-a)(c+a-b)(a+b-c))$$

où a, b et c représentent les distances entre les trois sommets du triangle.

2. Le rayon de la courbe à chaque segment (Sr) est représenté par la moyenne des rayons des triangles dont il fait partie.

3. La longueur de la courbure est obtenue en additionnant les longueurs des segments présentant un rayon supérieur à un seuil au-delà duquel la route apparaît rectiligne.

4. La valeur du seuil a été déterminée en analysant plusieurs segments.

- La densité de population de la zone géographique : cette caractéristique ne présente pas de difficulté particulière d'obtention : il s'agit pour une position géographique courante, de déterminer le nombre d'habitants pour une surface donnée (par exemple au kilomètre carré).

Dans au moins un mode de réalisation, ces caractéristiques sont obtenues à partir de la position géographique ou d'une approximation de la position géographique du terminal de communication de l'utilisateur. Ces données sont utilisées pour former la première partie du vecteur d'entrée qui est fourni au module de classification.

5.4. Caractéristiques dynamiques

Les caractéristiques sont dites dynamiques car elles évoluent en fonction du moment et de l'endroit où l'on fait la prédiction, de la météo, de la position du soleil et des variables temporelles. Plus précisément, dans au moins un mode de réalisation, les caractéristiques dynamiques comprennent :

- La date et l'heure (issue de l'horodatage de la requête transmise par le dispositif d'utilisateur).
- Une estimation du trafic routier courant (soit cette estimation est obtenue par l'intermédiaire d'un fichier d'historique du trafic routier passé, soit elle est obtenue par l'intermédiaire d'une connexion à un service idoine, type Tomtom®, Coyote®). L'estimation du trafic routier se présente sous la forme d'une estimation d'un nombre de véhicules présents sur un segment routier sur une période temporelle donnée. Afin de ne pas limiter la quantité d'informations apportée par cette caractéristique dynamique dans la classification ultérieure, l'ensemble des véhicules est pris en compte, et non pas uniquement les véhicules roulant dans le même sens que l'utilisateur.
- L'orientation de la route par rapport au sens de circulation de l'utilisateur : cette donnée représente l'orientation d'une portion ou d'un segment de route par rapport au nord géographique. Pour déterminer si une route est orientée vers l'ouest, l'est, le nord ou le sud, nous avons utilisé la formule suivante :

$$\text{Angle} = \arctan\left(\sin(\text{long2} - \text{long1}) \times \cos(\text{lat2}), \cos(\text{lat1}) \times \sin(\text{lat2}) - \sin(\text{lat1}) \times \cos(\text{lat2})\right.$$

$$\left. \times \cos(\text{long2} - \text{long1})\right):$$

où (lat1, long1) et (lat2, long2) sont le couple latitude-longitude du point de départ et du point d'arrivée de la portion, respectivement.
Cette information est importante puisqu'elle est fonction de la direction du déplacement de l'utilisateur.
- Les conditions météorologiques, formant un tableau de données numériques, et comprenant les données suivantes : la température, la vitesse du vent, la pression atmosphérique, les précipitations, la quantité de neige, le taux d'humidité et la nébulosité. Comme pour les données relatives au trafic, soit celles-ci sont obtenues sous la forme d'une estimation, soit elles sont obtenues par l'intermédiaire d'une connexion à un service idoine (de type MeteoFrance® ou WheatherChannel®). Pour des questions de pertinence des données fournies au module de classification, cependant, des données actualisées de météorologies sont fournies.
- La position du soleil : les angles solaires dépendent uniquement du lieu (latitude, longitude) et du temps. Ils sont représentés par des fonctions déterministes (les notations sont conservées tout au long de la présentation des formules) :
- Élévation du soleil :

$$\text{Elevation} = \sin^{-1}(\sin\delta\sin\varphi + \cos\delta\cos\varphi\cos(\text{HRA}))$$

où $\varphi$ est la latitude, et $\delta$ est la déclinaison calculée selon la formule ci-dessous.

$$\delta = -23.45° \times \cos\left(\frac{360}{365} \times (d + 10)\right)$$

où d est le jour de l'année.
- Concernant l'angle horaire HRA :

$$\text{HRA} = 15°\left(\text{LT} - 12 + \frac{4(\text{long} - 15°\Delta T_{\text{UTC}}) + \text{EoT}}{60}\right)$$

Où :

LT: est l'heure locale ;
$\Delta T_{UTC}$: différence entre le temps universel et le temps local en heures ;
long: longitude de la position ;
EoT: L'équation du temps qui corrige l'excentricité de l'orbite de la Terre et présentée comme :

$$EoT = 9.87\sin(2B) - 7.53\cos(B) - 1.5\sin(B) \text{ with } B = \frac{360}{365}(d - 81)$$

- Azimut solaire:

$$Azimuth = \cos^{-1}\frac{\sin\delta\cos\varphi - \cos\delta\sin\varphi\cos(HRA)}{\cos\alpha}$$

Où $\alpha$ est l'élévation.
- Zenith solaire : il s'agit simplement de l'angle entre le soleil et la verticale et il est représenté par $\lambda = 90° - \alpha$.

Les inventeurs ont déterminé que cette caractéristique dynamique relative à la position du soleil dans le ciel est importante dans le cadre d'une détermination de la probabilité de survenance d'un accident. Aussi, cette caractéristique fait l'objet d'une attention particulière dans le cadre de la mise en oeuvre de la technique décrite.

5.5. Conservation des résultats

Selon la présente divulgation, afin de réduire non seulement les temps de traitement, mais également les ressources nécessaires à l'obtention du score, les inventeurs ont prévu un mécanisme de conservation des résultats obtenus par l'intermédiaire du module de classification. D'une manière générale, le principe de cette conservation consiste, pour un résultat correspondant à un vecteur d'entrée prédéterminé, à conserver ce résultat durant un temps prédéterminé. Cette conservation, cependant, n'est pas mise en oeuvre uniquement en fonction du temps passé.
Plus particulièrement, dans au moins un exemple de réalisation, la conservation des résultats (scores) précédemment obtenus comprend, l'insertion, dans une structure de données adéquate, des données d'entrées et du score obtenu pour ces données d'entrée. Typiquement, les données d'entrée conservées sont : la position géographique, la date et l'heure, les caractéristiques statiques et les caractéristiques dynamiques associées. Ces données sont conservées dans la structure de données de mise en cache tant que les caractéristiques dynamiques associées sont pertinentes. Le degré de pertinence d'une caractéristique dynamique est fonction de la caractéristique dynamique associée. Par exemple, la caractéristique dynamique « météo », présentée précédemment, comprend trois composantes : température, pluviométrie, couverture nuageuse. Ces composantes ne présentent pas les mêmes implications vis-à-vis du score obtenu et le maintien en cache d'un score est déterminé en fonction de la criticité d'une caractéristique dynamique ou d'une composante de caractéristique dynamique pour l'obtention du résultat. Ainsi, chaque composante dynamique du modèle de prédiction utilisé par le module de classification est associée à un niveau de criticité, prédéterminé.
Ainsi, dans cet exemple de réalisation, en plus des étapes précédentes, lorsqu'une requête d'obtention d'un score est reçue par le dispositif serveur, celui-ci met en oeuvre les étapes suivantes :

- Obtention des caractéristiques statiques courantes associées à la position géographique ;
- Obtention des caractéristiques dynamique courantes associées à la position géographique ;
- Recherche, au sein de la base de données de conservation, d'enregistrements de données se rapportant aux caractéristiques statiques courantes.

Lorsqu'au moins un enregistrement de données correspond aux caractéristiques statiques courantes est identifié au sein de la base de données de conservation :

- Évaluation, pour ledit au moins un enregistrement de données, de différences entre les caractéristiques dynamiques enregistrées dans ledit au moins un enregistrement de données et les caractéristiques dynamiques courantes, en fonction des criticités respectives des caractéristiques dynamiques ; et
- Lorsqu'un enregistrement de données respecte les critères l'évaluation, fourniture du score associé à l'enregistrement de données, en lieu et place de l'appel au module de décision.

De plus, lors de cette recherche effectuée au sein de la structure de résultats de données de conservation, il apparait qu'un certain nombre d'enregistrements correspondent à des caractéristiques statiques, mais qu'aucun de ces enregistrements en correspond aux caractéristiques dynamiques, une suppression des enregistrements est effectuée.

Ainsi, ce procédé comprend de nombreux avantages : d'une part il permet d'économiser des ressources et de partager des résultats (des scores) pour des requêtes dont les vecteurs d'interrogations sont identiques ou similaires et d'autre part il permet d'épurer la base de données de conservation en supprimant les enregistrements qui ne sont plus pertinents.

5.6. Autres caractéristiques, système et dispositif de mise en oeuvre

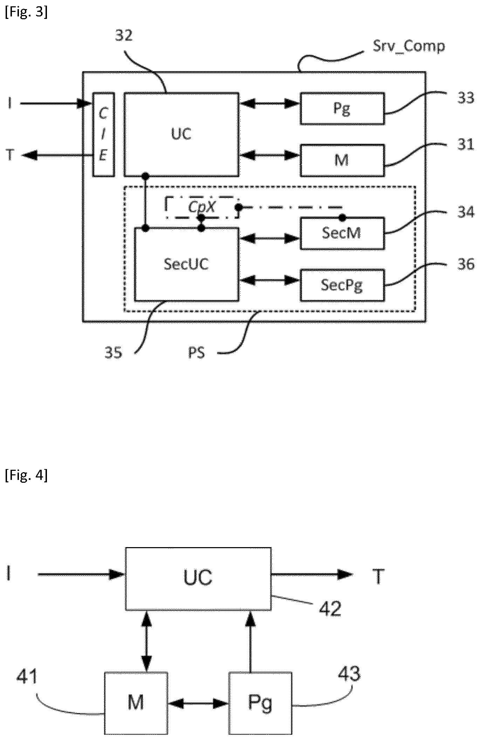

On présente, en relation avec la figure 3, une architecture simplifiée d'un dispositif électronique serveur (Srv_Comp) apte à effectuer le traitement de données pour l'évaluation d'un risque de survenance d'accidents de la route. Un dispositif électronique serveur (Srv_Comp) comprend un premier module électronique comprenant une mémoire 31, une unité de traitement 32 équipée par exemple d'un microprocesseur, et pilotée par un programme d'ordinateur 33. Le dispositif électronique comprend optionnellement un deuxième module électronique comprenant une mémoire sécurisée 34, qui peut être fusionnée avec la mémoire 31 (comme indiqué en pointillés, dans ce cas la mémoire 31 est une mémoire sécurisée), une unité de traitement sécurisée 35 équipée par exemple d'un microprocesseur sécurisée et de mesure physiques de protection (protection physique autour de la puce, par treillis, vias, etc. et protection sur les interfaces de transmission de données), et pilotée par un programme d'ordinateur 36 spécifiquement dédié à cette unité de traitement sécurisée 35, ce programme d'ordinateur 36 mettant optionnellement en oeuvre toute ou partie du procédé de traitement de preuve numérique tel que précédemment décrit. Le groupe composé de l'unité de traitement sécurisée 35, de la mémoire sécurisée 34 et du programme d'ordinateur dédié 36 constitue le module sécurisé (PS) du dispositif électronique serveur (Srv_Comp). Dans au moins un mode de réalisation, la présente technique est mise en oeuvre sous la forme d'un ensemble de programmes, ensemble installé en partie ou en totalité sur cette portion sécurisée du terminal de traitement de transaction. Dans au moins un autre mode de réalisation, la présente technique est mise en oeuvre sous la forme d'un composant dédié (CpX) pouvant traiter des données des unités de traitement et installé en partie ou en totalité sur la portion sécurisée du dispositif de traitement. Par ailleurs, le dispositif électronique serveur (Srv_Comp) comprend également des moyens de communication (CIE) se présentant par exemple sous la forme de composants réseaux (WiFi, 3G/4G/5G, filaire) qui permettent au dispositif de recevoir des données (I) en provenance d'entités connectées à un ou plusieurs réseaux de communication et des transmettre des données traitées (T) à de telles entités.

Un tel dispositif serveur comprend, en fonction des modes de réalisation :

- Un module de réception, en provenance d'un dispositif d'utilisateur, d'une donnée représentative d'une position géographique dudit dispositif d'utilisateur ;
- Un module pour l'obtention de caractéristiques statiques de localisation, en fonction de la donnée représentative de la position géographique ;
- Un module pour l'obtention de caractéristiques dynamiques de localisation, en fonction de donnée représentative de la position géographique et de la date et de l'heure courante ;
- Un module pour la fourniture, à un module de classification, des caractéristiques dynamiques et des caractéristiques statiques préalablement obtenues, lequel module de classification délivre un score représentatif du risque de survenance d'un accident de la route.

Comme explicité précédemment, ces moyens sont mis en oeuvre par l'intermédiaire de modules et/ou de composants, par exemple sécurisés. Ils permettent ainsi d'assurer la sécurité des transactions réalisées tout en garantissant une plus grande maintenabilité du dispositif.

On présente, en relation avec la figure 4, une architecture simplifiée d'un dispositif électronique apte à effectuer le traitement de données pour l'évaluation d'un risque de survenance d'accidents de la route tel que présentée précédemment. Un tel dispositif électronique comprend une mémoire 41, une unité de traitement 42 équipée par exemple d'un microprocesseur, et pilotée par le programme d'ordinateur 43, mettant en oeuvre le procédé selon l'invention. Dans au moins un mode de réalisation, l'invention est mise en oeuvre sous la forme d'une application installée sur un dispositif de communication en possession de l'utilisateur et/ou par l'intermédiaire d'un dispositif dédié uniquement au traitement de données pour l'évaluation d'un risque de survenance d'accidents de la route, par exemple installé au sien d'un véhicule. Un tel dispositif électronique comprend :

- Un module de transmission, à un dispositif serveur, d'une donnée représentative d'une position géographique dudit dispositif d'utilisateur, sous la forme d'une requête d'interrogation ;
- Des moyens de réception, en provenance du dispositif serveur, d'une réponse à la requête d'interrogation, laquelle réponse comprend en fonction des modes de réalisation, un message à présenter à l'utilisateur, ce message pouvant être remplacé par une valeur représentative du score ; et

- D'éventuels moyens de modulation ou de modification du score reçu depuis le dispositif serveur pour adapter le score aux conditions et paramètres de conduite du véhicule dans lequel le dispositif d'utilisateur est installé.

Ces moyens se présentent sous la forme d'une application logicielle spécifique, ou encore sous la forme de composants matériels dédiés construits en vue de la réalisation de ces fonctions, tel qu'un élément de sécurisation (SE) ou un environnement d'exécution sécurisé. L'élément de sécurisation peut se présenter sous la forme d'une carte Sim, USim, UICC, ou encore un composant de sécurité spécifique.

Ces moyens se présentent sous la forme d'une application logicielle spécifique, ou encore sous la forme de composants matériels dédiés construits en vue de la réalisation de ces fonctions, tel qu'un élément de sécurisation (SE) ou un environnement d'exécution sécurisé. L'élément de sécurisation peut se présenter sous la forme d'une carte Sim, USim, UICC, ou encore un composant de sécurité spécifique.

## Revendications

1. Procédé d'obtention d'une donnée représentative d'un risque de survenance d'un accident de la route, procédé mis en oeuvre par un dispositif électronique serveur, procédé comprenant :

   - Une étape de réception (10), en provenance d'un dispositif d'utilisateur, d'une donnée représentative d'une position géographique courante dudit dispositif d'utilisateur ;
   - Une étape d'obtention (20) de caractéristiques statiques de localisation, en fonction de la donnée représentative de la position géographique ;
   - Une étape d'obtention (30) de caractéristiques dynamiques de localisation, en fonction de donnée représentative de la position géographique courante et de la date et de l'heure courante ;
   - Une étape de fourniture (40), à un module de classification, des caractéristiques dynamiques et des caractéristiques statiques préalablement obtenues, lequel module de classification délivre (50) un score représentatif du risque de survenance d'un accident de la route, et en ce que postérieurement à la délivrance, par le module de classification (50) délivrant ledit score (Sco), ledit procédé comprend une étape de formatage, à destination du dispositif d'utilisateur, d'un message de réponse, ledit message tenant compte de la valeur du score (Sco) et en ce que le message comprend une alerte à destination de l'utilisateur lorsque ladite valeur du score excède un plafond prédéterminé, et en ce que le message de réponse comprend un message préformaté à destination de l'utilisateur et une donnée représentative du score, de sorte que le dispositif d'utilisateur est en mesure d'effectuer une modification du score en fonction de paramètres qui lui sont propres.

2. Procédé d'obtention selon la revendication 1, **caractérisé en ce que** l'étape de réception (10) comprend :

   - une étape de réception, par le dispositif électronique serveur, d'une requête d'obtention d'un message d'information en provenance du dispositif d'utilisateur, ladite requête comprenant la donnée représentative de la position géographique dudit dispositif d'utilisateur et un identifiant du dispositif d'utilisateur ;
   - une étape d'horodatage de ladite requête ;
   - une étape d'insertion de ladite requête horodatée au sein d'une base de données ;
   - une étape optionnelle d'obtention au sein de la base de données, d'un score précédemment calculé pour une position proche de la position géographique courante et à un temps proche de l'horodatage effectué pour ladite requête.

3. Procédé d'obtention selon la revendication 1, **caractérisé en ce que** l'étape d'obtention (20) de caractéristiques statiques de localisation comprend :

   - La détermination, à partir d'une base de données de segments de routes, d'un segment de route courant qui est associé à la donnée représentative d'une position géographique courante ;
   - L'obtention, d'une courbure du segment de route courant, ladite courbure étant fournie sous la forme d'un rayon de courbure moyen dudit segment de route ;
   - La détermination d'une limitation de la vitesse associée au segment de route courant ;
   - La densité de population de la zone géographique associée à la donnée représentative de la position géographique courante.

4. Procédé d'obtention selon la revendication 1, **caractérisé en ce que** l'étape d'obtention (30) de caractéristiques dynamiques de localisation comprend :

   - une étape d'obtention, sous la forme d'une donnée numérique, d'une estimation du trafic routier courant de la zone géographique associée à la donnée représentative de la position géographique courante et de la date et de l'heure courante ;
   - une étape d'obtention, sous la forme d'un tableau de données numériques, des conditions météorologiques associées à la donnée représentative de la position géographique courante et de la date et de l'heure courante ;
   - une étape de détermination de l'orientation d'un segment de route courant par rapport au sens de circulation du dispositif d'utilisateur ;
   - une étape de détermination de la position du soleil associées à la donnée représentative de la position géographique courante et de la date et de l'heure courante.

5. Procédé d'obtention selon la revendication 1, **caractérisé en ce que** l'étape de fourniture (40), au module de classification, des caractéristiques dynamiques et des caractéristiques statiques comprend :

$$y = f(\,(\text{traffic} \times w_0 + \text{weather} \times w_1 + \ldots + \text{road geometry} \times w_{n-1} + \text{sun position} \times w_n)$$
$$+ b)$$

où $w\_i, i \in \{0, \ldots, n\}$ sont les poids transformant les données et b est le biais permettant le décalage de la fonction d'activation f. Pour les couches cachées, la fonction ReLU(x) =max(x,0) a été utilisée comme fonction d'activation, tandis que sigmoïde(x)=1/(1+exp(-x)) a été utilisée pour la couche de sortie. Cette dernière nous permet de représenter la sortie sous forme de probabilité.

6. Dispositif électronique d'obtention d'une donnée représentative d'un risque de survenance d'un accident de la route, dispositif comprenant :

   - Un module de réception, en provenance d'un dispositif d'utilisateur, d'une donnée représentative d'une position géographique dudit dispositif d'utilisateur ;
   - Un module pour l'obtention de caractéristiques statiques de localisation, en fonction de la donnée représentative de la position géographique ;
   - Un module pour l'obtention de caractéristiques dynamiques de localisation, en fonction de donnée représentative de la position géographique et de la date et de l'heure courante ;
   - Un module pour la fourniture, à un module de classification, des caractéristiques dynamiques et des caractéristiques statiques préalablement obtenues, lequel module de classification délivre un score représentatif du risque de survenance d'un accident de la route ;
   - Un module de formatage pour la fourniture à destination du dispositif d'utilisateur d'un message de réponse, ledit message de réponse tenant compte de la valeur du score (Sco), ledit message comprenant une alerte à destination de l'utilisateur lorsque ladite valeur du score excède un plafond prédéterminé, ledit message de réponse comprenant un message préformaté à destination de l'utilisateur et une donnée représentative du score, de sorte que le dispositif d'utilisateur est en mesure d'effectuer une modification du score en fonction de paramètres qui lui sont propres.

7. Produit programme d'ordinateur comprenant des instructions de code de programme pour la mise en oeuvre d'un procédé de communication selon la revendication 1, lorsqu'il est exécuté par un processeur.

[Fig. 1]

[Fig. 2]

[Fig. 3]

[Fig. 4]

Europäisches
Patentamt

European
Patent Office

Office européen
des brevets

## RAPPORT DE RECHERCHE EUROPEENNE

Numéro de la demande

**EP 23 17 7181**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/123806 A1 (SCHUMANN JR DOUGLAS D [US] ET AL) 17 mai 2012 (2012-05-17) * alinéas [0041] – [0042], [0045] – [0047], [0049] – [0051], [0053] – [0056], [0072], [0081], [0084], [0094] * * alinéas [0104] – [0105], [0116], [0154], [0193], [0196], [0198] * * alinéas [0201], [0204], [0211], [0215], [0227], [0223] – [0224], [0233], [0235] * ----- | 1-7 | INV. G08G1/01 G08G1/09 G08G1/0967 G08G1/16 G01C21/36 G01C21/34 B60W30/095 |
| X | WO 2021/191168 A1 (EXTRACOVER HOLDINGS LTD [GB]) 30 septembre 2021 (2021-09-30) * page 1 – page 4 * * paragraphe 2; page 6 * * paragraphe 3; page 10 * * page 8 – page 12 * ----- | 1-7 | |
| X | US 2016/379485 A1 (ANASTASSOV ANTON [NL] ET AL) 29 décembre 2016 (2016-12-29) * alinéas [0034], [0039], [0042] – [0045], [0059] – [0060], [0066] – [0067], [0069] – [0070], [0077] – [0079], [0081] – [0122] * ----- | 1-7 | DOMAINES TECHNIQUES RECHERCHES (IPC) G08G G01C B60W |

Le présent rapport a été établi pour toutes les revendications

| Lieu de la recherche | Date d'achèvement de la recherche | Examinateur |
|---|---|---|
| La Haye | 29 septembre 2023 | Thareau-Berthet, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 17 7181

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-2023

| Document brevet cité au rapport de recherche | Date de publication | Membre(s) de la famille de brevet(s) | Date de publication |
|---|---|---|---|
| US 2012123806 A1 | 17-05-2012 | US 2012123806 A1<br>US 2014350970 A1 | 17-05-2012<br>27-11-2014 |
| WO 2021191168 A1 | 30-09-2021 | AUCUN | |
| US 2016379485 A1 | 29-12-2016 | AUCUN | |

EPO FORM P0460

Pour tout renseignement concernant cette annexe : voir Journal Officiel de l'Office européen des brevets, No.12/82